# EUROPEAN PATENT SPECIFICATION

(11) **EP 1 866 233 B1**
(45) Date of publication and mention of the grant of the patent: **04.04.2012**
(21) Application number: 06748559.9
(22) Date of filing: 23.03.2006
(51) Int. Cl.: B60R 21/233

(54) **AIRBAG TETHER RELEASE**
AIRBAGHALTEBANDFREIGABE
ENSEMBLE DE LIBERATION DE SANGLES DE RETENUE D'UN SAC GONFLABLE

(30) Priority: 23.03.2005 US 87476; 23.03.2005 US 87173
(43) Date of publication of application: 19.12.2007
(73) Proprietor: Autoliv ASP, Inc., Ogden, Utah 84405 (US)
(72) Inventor: PARKINSON, David W., North Ogden, UT 84414 (US); NELSON, Earl H., Ogden, UT 84401 (US); SMITH, Bradley W., Ogden, UT 84404 (US)
(74) Representative: Beattie, Alex Thomas Stewart
(86) International application number: PCT/US2006/010441
(87) International publication number: WO 2006/102432

(56) References cited:
- US-A- 6 076 854
- US-A- 6 076 854
- US-A1- 2002 117 840
- US-A1- 2004 046 376
- US-A1- 2004 046 376
- US-A1- 2005 161 922

## Description

### Technical Field

The present invention relates generally to the field of automotive protective systems. More specifically, the present invention relates to inflatable airbags for automobiles.

### Brief Description of the Drawings

Understanding that drawings depict only typical embodiments of the invention and are not therefore to be considered to be limiting of its scope, the invention will be described and explained with additional specificity and detail through the use of the accompanying drawings in which:

FIG. 1A is a side view of an embodiment of an airbag with an internal tether being inflated.

FIG. 1B is a side view of an airbag being inflated after the internal tether has been released.

FIG. 2A is a perspective view of an embodiment of an airbag inflation module.

FIG. 2B is a perspective view of the embodiment depicted in FIG. 1 following deployment of the inflator operatively connected with the tether.

FIG. 3 is a perspective view of another embodiment of an airbag inflation module.

FIG. 4 is a perspective view of a portion of an example an airbag inflation module of covered by the claims of the present invention.

FIG. 5A is a perspective view of the embodiment of FIG. 4 with the tether captured.

FIG. 5B is a perspective view of the embodiment of FIG. 5A with the tether released.

FIG. 6 is a perspective view of an alternative embodiment of an airbag module.

FIG. 7 is a perspective view of an alternative example of an airbag module of covered by the claims of the present invention.

US6076854A shows an air bag assembly comprises an air bag and a primary inflator for inflating the air bag. The air bag has a full inflated volume and a lesser partial inflated volume which is achieved by anchoring a plurality of tethers with a heat-sensitive link to reduce the inflated volume of the air bag to the partial inflated volume. A secondary inflator is selectively operable to release the tethers and coact with the primary inflator to inflate the air bag to the full inflated volume. Actuation of only the primary inflator inflates the air bag to only partial volume as constrained by the tethers. Actuation of the secondary inflator melts the link to release the tethers and inflate the air bag to full volume. In another embodiment, the secondary inflator is replaced by a tether control which includes an actuator that is selectively operable to release the tethers. The air bag includes a vent which is normally open so that operation of only the inflator will inflate the air bag to only partial volume as constrained by the tethers, while operation of the actuator releases the tethers and closes the vent and enable the inflator to inflate the air bag to full inflated volume.

US2004046376A shows an assembly of efficient construction and operation to hold restraining air bag tethers to a shortened operative length under a first set of conditions and to extend such tethers under a second set of conditions. The extension of the restraining tethers is carried out in conjunction with the delivery of an increased volume of inflating gas to the air bag cushion. The air bag assembly may be operated using as few as two activatable initiators to activate inflation stages while simultaneously controlling tether length to effect delivery of a proper volume of inflation gas for a desired cushion profile.

US2002117840A discloses a release mechanism of efficient construction and operation is provided to hold profile restraining air bag tethers in a shortened operative condition under a first set of predetermined conditions and to extend such tethers under a second set of predetermined conditions. The extension of the restraining tethers may be carried out in conjunction with the delivery of an increased volume of inflating gas to the air bag cushion utilizing a gas emitting inflator in conjunction with a dynamic variable inflation device to effect delivery of a proper volume of inflation gas while releasing the tethers from a restrained length condition.

### Detailed Description of Preferred Embodiments

Described below are embodiments of methods and apparatus for inflating an airbag with a tether release system. In one embodiment of the invention, first and second inflators are connected with a module housing and positioned to inflate an inflatable cushion. The first and second inflators each have at least one exit gas port. A tether capture member is connected with the module housing and is adapted to hold a tether, which is connected with the inflatable cushion. The tether capture member is also adapted to release the tether upon deployment of one of the inflators, such that the exit gas flow from the inflator causes the release of the tether.

Thus, this embodiment allows for partial inflation of an airbag or full inflation of the airbag. Partial inflation of the airbag may be achieved by restricting the inflation size of the airbag with one or more tethers and by leaving undeployed the inflator operatively connected with the tether. Full inflation may be achieved by deployment of the inflator operatively connected with the tether such that the tether no longer restricts the inflation size of the airbag.

Of course, full deployment may be achieved by deploying all, or less than all, of the available inflators. Accordingly, in an embodiment with two inflators, full deployment may be achieved by deploying both inflators or, alternatively, by deploying only the inflator operatively connected with the tether. Likewise, partial deployment may be achieved by deploying any number of inflators up to one less than the total number of inflators available (the inflator operatively connected with the tether should not be deployed to achieve partial deployment, so as to leave the tether in a position in which it can restrict the inflation size of the airbag). For example, in an embodiment with two inflators, partial deployment would be achieved by deploying just one of the two inflators (the inflator not operatively connected with the tether).

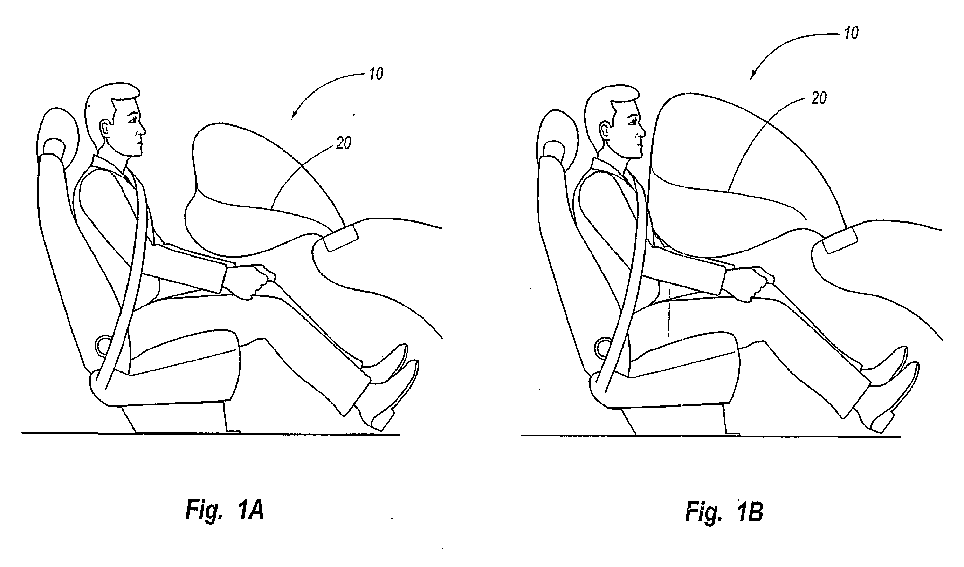

Partial deployment of an airbag 10 with an internal tether 20 is shown in FIG. 1 A. Tether 20 is shown in FIG. 1A restraining airbag 10 and restricting its inflation size. FIG. 1B depicts tether 20 after it has been released to allow airbag 10 to be fully inflated. As will become apparent, the depiction of FIG. 1B is achieved after deployment of an inflator (not shown) operatively connected with tether 20. In other words, deployment of one of the inflators allowed tether 20 to be released from one of its internal connections with airbag 10 and thereby allow airbag 10 to fully inflate.

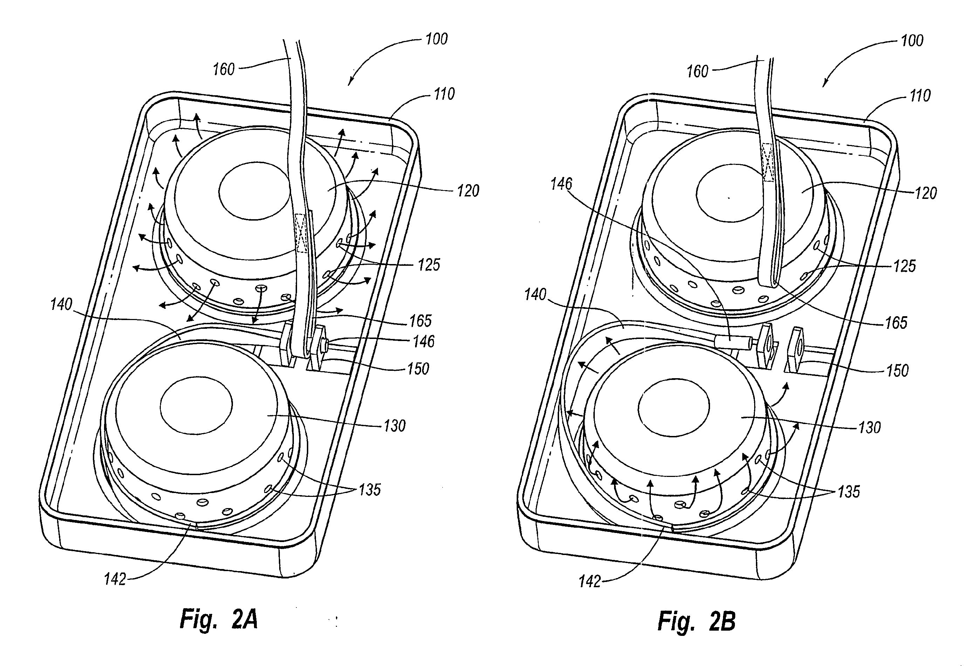

One embodiment of the invention will now be described in greater detail with reference to FIGS. 2A-2B. These figures depict an inflation module 100. Inflation module 100 includes module housing 110, first inflator 120, and second inflator 130. First inflator 120 includes exit gas ports 125 and second inflator 130 includes exit gas ports 135. Module housing 110 is an example of means for housing an airbag inflation module. First inflator 120 and second inflator 130 are examples of inflation means for inflating an inflatable cushion. It should be understood that the terms "first" and "second" are used arbitrarily and for the sake of convenience in labeling only. These terms should not be interpreted so as to require or imply a particular sequence in the deployment of the inflators. First inflator 120 can be deployed before, simultaneously with, or after second inflator 130 depending upon, for example, the airbag system used, the circumstances and characteristics of the crash, and the desired shape and size of the airbag cushion.

A tether capture member 140 is attached to module housing 110 at end 142. Tether capture member 140 is adapted to have a first configuration wherein the tether capture member holds a tether and a second configuration wherein the tether is released from tether capture member 140. This allows an airbag system incorporating this embodiment of the invention to deploy variably, both with respect to the volume and/or shape of the airbag cushion. Maintaining the tether capture member in its first configuration allows the tether to restrain the size and/or shape of the airbag upon deployment, whereas reconfiguring the tether capture member such that it is in the second configuration allows the airbag cushion to fully inflate. Of course, more than one tether and/or more than one tether capture member may be used to customize deployment characteristics as desired for any number of applications.

In the embodiment shown in FIGS. 2A-2B, tether capture member 140 comprises a band. In such embodiments in which the tether capture member comprises a band, the band may be metal, rubber, strapping, fabric, such as braided nylon, or any other structure or material available to one of skill in the art. At the end opposite from end 142, band 140 comprises a pin shown at 146. Pin 146 may be attached to band 140 or, alternatively, it may be integrally formed at the end of band 140. Likewise, pin 146 may be comprised of the same material as tether capture member 140 or of a different material.

As can be seen in the figures, band 140 is flexible, which allows it to be wrapped around second inflator 130. Band 140 also covers one or more of the exit gas ports 135. Pin 146 is inserted into a capture component 150. Capture component 150 releasably holds tether capture member 140 in place. Capture component 150 in the accompanying figures is integrally formed as part of module housing 110. However, capture component 150 may instead be formed separately and attached or otherwise connected with the module.

Tether capture member or band 140 is adapted to hold a tether 160 connected with an inflatable cushion (not shown), as can be seen from the figures. Tether 160 is an example of means for restraining the inflation size of an inflatable cushion. Band 140 is an example of means for holding the restraining means in a position in which it restricts the inflation size of an inflatable cushion. Tether 160 is looped at one end and tether loop 165 is connected with pin 146, which is held by capture component 150.

Tether capture member or band 140 is adapted to release tether 160 upon deployment of second inflator 130. Specifically, the inflation module is configured such that the exit gas flow from second inflator 130 causes the release of tether 160. Thus, pin 146 fits within capture component 150 in the first configuration of tether capture member 140 and is removed from capture component 150 in the second configuration of tether capture member 140.

Upon deployment of second inflator 130, exit gas flow from one or more exit gas ports 135 forces band 140 away from second inflator 130, thereby pulling pin 146 out of capture component 150. Once pin 146 has been pulled from capture component 150, tether loop 165 is no longer looped around pin 146 and tether 160 no longer restricts the inflation size of the airbag cushion (not shown), as depicted in FIG. 2B. In other words, tether capture member 140 is positioned adjacent to one or more exit gas ports 135 of second inflator 130 in its first configuration such that the force of the exit gas flow upon deployment of second inflator 130 pushes tether capture member 140 away from the exit gas port(s) 135 and into its second configuration. Thus, the force of the exit gas flow of second inflator 130 causes pin 146 to be pulled from capture component 150, thereby releasing tether 160 from tether capture member 140.

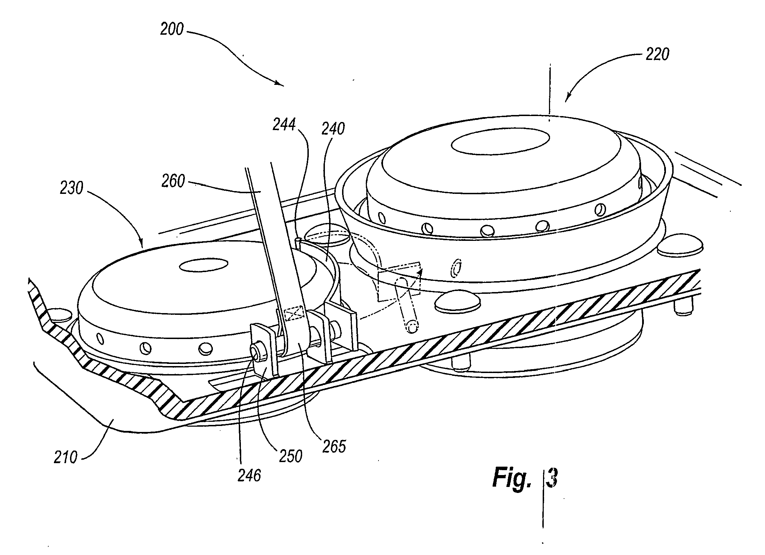

Another embodiment of the invention is shown in FIG. 3. FIG. 3 depicts an inflation module 200 including first inflator 220 and second inflator 230, both of which are positioned in module housing 210. Inflation module 200 includes a tether capture member 240. Tether capture member 240 is rigid and includes hinged region 244. Opposite from hinged region 244 is a pin 246, which is configured to fit within capture member 250. Tether 260 is looped around pin 246 at tether loop 265. [0025] Upon deployment of second inflator 230, inflation gas causes tether capture member 240 to pivot at hinged region 244 and pull pin 246 from capture member 250, thereby releasing tether 260 and allowing the airbag (not shown) to fully inflate. Tether capture member 240 is shown pivoted away from second inflator 230 in phantom in FIG. 3.

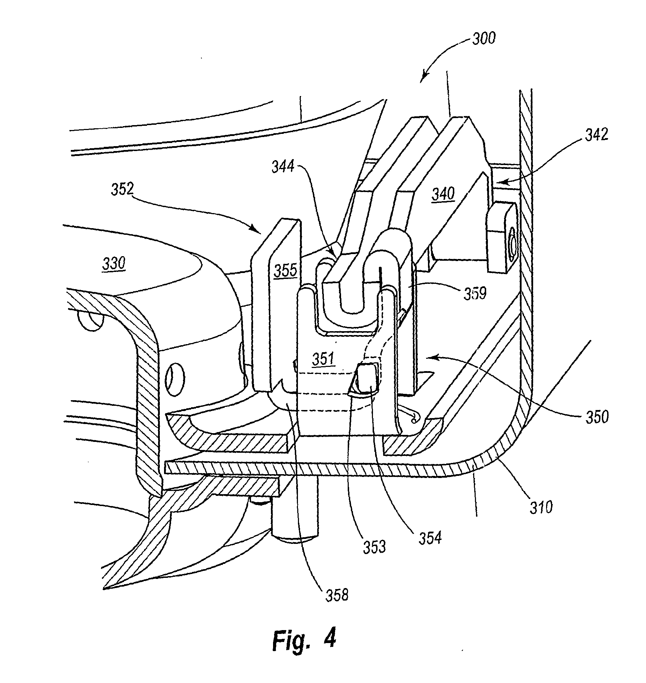

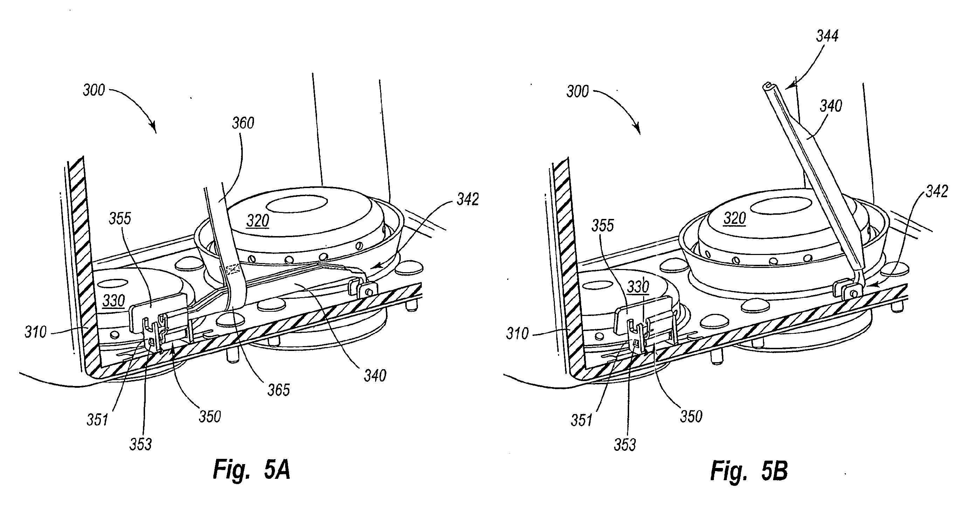

An alternative example not covered by the appended claims is shown in FIGS. 4 and 5A-5B. In these figures, an inflation module 300 is depicted. Inflation module 300 includes housing 310,- which holds first inflator 320 and second inflator 330. Tether capture member 340 in this embodiment comprises a rod. Rod 340 may be pivotally coupled at a first end 342 to a bracket attached to housing 310. Rod 340 may be configured to pivot vertically, as shown, or in any other manner, such as horizontally.

A capture component 350, which is connected with housing 310, includes a capture base 351 and a capture rocker 352. Capture base 351 may include a pair of opposing apertures 353, which are adapted to receive a pair of opposing flanges 354, one of which may be seen in FIG. 4. Flanges 354 extend from capture rocker 352. Apertures 353 are adapted to allow flanges 354 to pivot therein, such that capture rocker 352 can pivot about flanges 354. Capture rocker 352 also includes a plate member 355. Plate member 355 is disposed adjacent to inflator 330 and is connected with arm 358, as shown in FIG. 4. Arm 358, which extends from plate member 355, extends to a clip member 359.

The second end 344 of rod 340 may rest on or partially nest within capture base 351. Clip member 359 engages second end 344 of rod 340 and retains rod 340 in a fixed position for tether retention. As shown in FIGS. 5A-5B, tether 360 is held by tether capture member 340 at tether loop 365. Capture component 350 secures rod 340 in a fixed position and retains tether 360.

Plate member 355 is configured to receive the impact of the exhaust gas from inflator 330. Once inflator 330 has been deployed, the force of the inflation gas against plate member 355 causes capture rocker 352 to rock or pivot sufficient to disengage clip member 359 from its position of retention against rod 340. Rod 340 is thereby disengaged at its second end 344 and pivots freely about its first end 342, as shown in FIG. 5B. As the airbag cushion expands, tether 360 is tightened and is readily pulled off of rod 340. The airbag cushion is then able to expand to its full capacity.

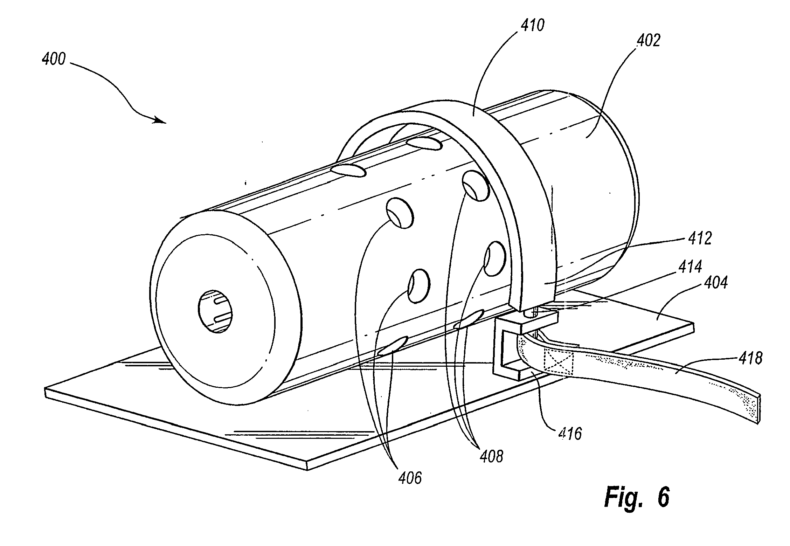

Referring to Figure 6, an alternative embodiment of a portion of an airbag retention system 400 is shown. The system 400 includes a single inflator 402 that may be embodied in a cylindrical configuration. The inflator 402 may have a longitudinal axis that may be horizontally or vertically oriented relative to a base 404. The base 404 may be included as a portion of a housing (not shown). The inflator 402 is in a fixed position to prevent movement during vehicle movement and during airbag cushion deployment. Retention of the inflator 402 may be accomplished using any number of connectors and fasteners known in the art. [0031] The inflator 402 may be a two-stage deployment inflator with each stage generating first and second amounts of exhaust gas. In this manner, the-inflator 402 provides two response levels depending on whether an impact or pre-impact condition exists. The first amount of exhaust gas exits the inflator 402 through first vents 406 that may be disposed in series along the perimeter of the inflator 402. Similarly, the second amount of exhaust gas exits the inflator 402-through second vents 408 that may be disposed in series.

A band 410 is disposed in proximity to the second vents 408 to receive the impact of the second amount of exhaust. The band 410 is removed from the first vents 406 to limit impact of the first amount of exhaust gas. The band 410 is secured at one end (not shown) such as to the base 404. The band 410 may be secured at a second end 612 to a pin 614. The pin 614 may be secured by frictional engagement or press fit to a bracket 416 that is secured to the base 404. A tether 418 is secured to the pin 414 in a manner similar to previous embodiments.

During impact detection, the inflator 402 vents a first amount of exhaust gas through the first vents 406. The band 410 does not receive sufficient force from the gas to remove the pin 414 and the tether 418 remains secured.

During pre-impact detection, the inflator 402 vents a second amount of exhaust gas through the second vents 408. The exhaust gas impacts the band 410 to dislodge the pin 414 from the bracket 416 and the tether 418 is released. After venting the second amount of gas, the inflator 402 vents the first amount of exhaust gas through the first vents 406 to continue to fill an airbag cushion.

A two-stage inflator 402 may also be used with the tether capture devices discussed previously above. Such devices may be disposed in proximity to vents to receive the impact of a single stage deployment. Thus, an airbag restraint system incorporating a two-stage inflator is not limited to the tether release of Figure 6.

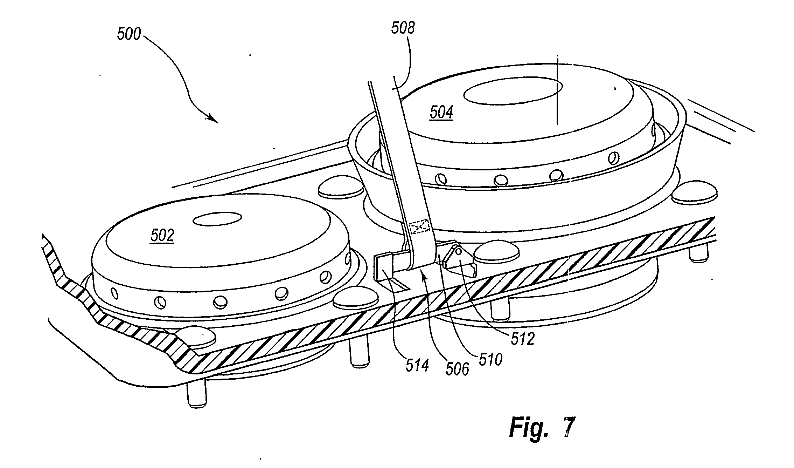

Referring to Figure 7, an alternative example of a portion of an airbag retention system 500 is shown which is not covered by the scope of the appended claims. The system 500 is similar to those previously described in that the system includes first and second inflators 502, 504. However, the system 500 may also be embodied with a single two-stage inflator as in Figure 6. The system 500 does not include a tether release mechanism that is operated by exhaust gas. Instead, the system 500 includes a tether release device 506 that is operated by electronic control.

The tether release device 506 is in electrical communication with pre- impact sensors. Upon a determination that a pre-impact condition exists, the tether release device 506 is electronically signaled to operate. The tether release device 506 releases the tether 508 and the inflators 502, 504 sequentially deploy exhaust gas. As can be appreciated, the tether release device 506 may be embodied in numerous ways including electromechanical, electromagnetic, and pyrotechnic components. In one embodiment, the tether release device 506 includes a pin or rod 510 that is pivotally coupled to a mount 512. The pin 510 is further coupled to a lock device 514. The lock device 514 releases its engagement of the pin 510 when electronically signaled. The lock device 514 may include a solenoid actuator, a pyrotechnic, an electromagnetic, or other component to_effect disengagement of the pin 510. As the pin 510 is released from the lock device 514, the tether 508 pulls on the pin 510 which causes the pin 510 to pivot. The tether 508 slides off the pin 510 and full deployment of an airbag cushion is enabled.

One of skill in the art will appreciate that a tether release device 506 may be embodied in other ways as well. Rather than enabling pivotal movement of a pin, a tether release device 506 may include an electromagnetic or pyrotechnic device to slide or rupture a pin from a fixed position. Thus, the tether release device 506 may be embodied in a manner similar to that of previous embodiments wherein a pin is pulled from a retainer. However, the act of disengagement is initiated electronically.

The above description fully discloses the invention including preferred embodiments thereof. Without further elaboration, it is believed that one skilled in the art can use the preceding description to utilize the invention to its fullest extent. Therefore the examples and embodiments disclosed herein are to be construed as merely illustrative and not a limitation of the scope of the present invention in any way.

It will be apparent to those having skill in the art that changes may be made to the details of the above-described embodiments without departing from the underlying principles of the invention. Embodiments of the invention in which an exclusive property or privilege is claimed are defined as follows.

## Claims

1. An airbag module (100, 200, 300), comprising:
an inflatable cushion (10);
a module housing (110, 210, 310);
a first inflator (120, 220, 320) connected with the module housing (110, 210, 310) and positioned to inflate the inflatable cushion (10), wherein the first inflator (120, 220, 320) has at least one exit gas port (125) formed therein;
a second inflator (130, 230, 330) connected with the module housing (110, 210, 310) and positioned to inflate the inflatable cushion (10), wherein the second inflator (130, 230, 330) has at least one exit gas port (135) formed therein;
a tether (160, 260, 360) connected with the inflatable cushion (10);
a capture component (150, 250, 350) connected with the module housing (110, 210, 310); and
a tether capture member (140, 240, 340) having a first configuration in which the tether capture member (140, 240, 340) holds the tether (160, 260, 360) and a second configuration in which the tether (160, 260, 360) is released from the tether capture member (140, 240, 360), wherein the capture component (150, 250, 350) is configured to releasably hold the tether capture member (140, 240, 340), wherein the tether capture member (140, 240, 340) comprises a flexible band, and the tether capture member (140, 240, 340) is positioned adjacent to the exit gas port (135) of the second inflator (130, 230, 330) in the first configuration whereby the gas exiting the exit gas port (135) upon deployment of the second inflator (130, 230, 330) is directed against the tether capture member (140, 240, 340) such that the exit gas directly pushes the tether capture member (140, 240, 340) away from the exit gas port (135) and into the second configuration.

2. The airbag module (100, 200, 300) of claim 1, wherein the tether capture member (140, 240, 340) is configured to pivot about an axis to result in the release of the tether (160, 260, 360).

3. The airbag module (100, 200, 300) of claim 1, wherein the tether capture member (140, 240, 340) is at least partially wrapped around the second inflator (130, 230, 330) in the first configuration.

4. The airbag module (100, 200, 300) of claim 1, wherein the tether capture member (140, 240, 340) further comprises a pin (146, 246, 346).

5. The airbag module (100, 200, 300) of claim 4, wherein the pin (146, 246, 346) is integrally formed at one end of the tether capture member (140, 240, 340).

6. The airbag module (100, 200, 300) of claim 1, wherein the capture component (150, 250, 350) is connected to the module housing (110, 210, 310).

7. The airbag module (100, 200, 300) of claim 1, wherein the capture component (150, 250, 350) is integrally formed with the module housing (110, 210, 310).

8. The airbag module (100, 200, 300) of claim 1, wherein the tether capture member (140, 240, 340) is connected to the module housing (110, 210,310).

9. The airbag module (100, 200, 300) of claim 1, wherein the tether capture member (140, 240, 340) comprises a pin (146, 246, 346), and wherein the pin (146, 246, 346) fits within the capture component (150, 250, 350).

10. The airbag module (100, 200, 300) of claim 9, wherein the pin (146, 246, 346) fits within the capture component (150, 250, 350) in the first configuration and is removed from the capture component (150, 250, 350) in the second configuration.

11. A method for inflating an inflatable cushion (10), comprising:
deploying a first inflator (120, 220, 320) to deliver gas via an exit gas port (125) into an inflatable cushion (10), wherein a tether (160, 260, 360) is connected with the inflatable cushion (10);
holding the tether (160, 260, 360) via a tether capture member (140, 240, 340) in a first configuration such that the tether (160, 260, 360) is configured to restrict the inflation size of the inflatable cushion (10);
deploying a second inflator (130, 230, 330) to deliver gas via an exit gas port (135) into the inflatable cushion (10); and
releasing the tether (160, 260, 360) **characterized by** pivoting at least a portion of a tether capture member (140, 240, 340) about an axis such that the tether capture member (140, 240, 340) is no longer at least partially wrapped around the second inflator (130, 230, 330) in the first configuration and such that the tether (160, 260, 360) no longer restricts the inflation size of the inflatable cushion (10), wherein the step of releasing the tether (160, 260, 360) is caused by the gas exiting the exit gas port (135) upon deployment of the second inflator (130, 230, 330) and being directed against the tether capture member (140, 240, 340) such that the exit gas directly pushes the tether capture member (140, 240, 340) away from the exit gas port (135) and into a second configuration.

12. The method of claim 11, wherein a capture component (150, 250, 350) releasably holds the tether capture member (140, 240, 340) in place.

13. The method of claim 12, wherein the tether capture member comprises a pin (146, 246, 346) positioned at one end of the tether capture member (140, 240, 340), wherein the pin (146, 246, 346) fits within the capture component (150, 250, 350), and wherein the force of the exit gas flow of the second inflator (130, 230, 330) causes the pin (130, 230, 330) to be pulled from the capture component (150, 250, 350).

## Patentansprüche

1. Airbagmodul (100, 200, 300), umfassend:
ein aufblasbares Kissen (10);
ein Modulgehäuse (110, 210, 310);
einen ersten Gasgenerator (120, 220, 320), der mit dem Modulgehäuse (110, 210, 310) verbunden und dazu positioniert ist, das aufblasbare Kissen (10) aufzublasen, wobei der erste Gasgenerator (120, 220, 320) zumindest eine in ihm ausgebildete Auslassgasöffnung (125) aufweist;
einen zweiten Gasgenerator (130, 230, 330), der mit dem Modulgehäuse (110, 210, 310) verbunden und dazu positioniert ist, das aufblasbare Kissen (10) aufzublasen, wobei der zweite Gasgenerator (130, 230, 330) zumindest eine in ihm ausgebildete Auslassgasöffnung (135) aufweist;
einen mit dem aufblasbaren Kissen (10) verbundenen Haltegurt (160, 260, 360);
eine mit dem Modulgehäuse (110, 210, 310) verbundene Fangkomponente (150, 250, 350); und
ein Haltegurt-Fangelement (140, 240, 340), das eine erste Konfiguration aufweist, in der das Haltegurt-Fangelement (140, 240, 340) den Haltegurt (160, 260, 360) hält, und eine zweite Konfiguration aufweist, in der der Haltegurt (160, 260, 360) aus dem Haltgurt-Fangelement (140, 240, 360) freigegeben wird, wobei die Fangkomponente (150, 250, 350) dazu konfiguriert ist, das Haltegurt-Fangelement (140, 240, 340) lösbar zu halten, wobei das Haltegurt-Fangelement (140, 240, 340) ein flexibles Band umfasst und das Haltegurt-Fangelement (140, 240, 340) neben der Auslassgasöffnung (135) des zweiten Gasgenerators (130, 230, 330) in der ersten Konfiguration positioniert ist, wodurch das Gas, das die Auslassgasöffnung (135) bei Auslösung des zweiten Gasgenerators (130, 230, 330) verlässt, so gegen das Haltegurt-Fangelement (140, 240, 340) gerichtet wird, dass das Auslassgas das Haltegurt-Fangelement (140, 240, 340) direkt von der Auslassgasöffnung (135) weg und in die zweite Konfiguration drückt.

2. Airbagmodul (100, 200, 300) nach Anspruch 1, wobei das Haltegurt-Fangelement (140, 240, 340) dazu konfiguriert ist, um eine Achse zu schwenken, um zur Freigabe des Haltegurts (160, 260, 360) zu führen.

3. Airbagmodul (100, 200, 300) nach Anspruch 1, wobei das Haltegurt-Fangelement (140, 240, 340) zumindest teilweise um den zweiten Gasgenerator (130, 230, 330) in der ersten Konfiguration gewickelt ist.

4. Airbagmodul (100, 200, 300) nach Anspruch 1, wobei das Haltegurt-Fangelement (140, 240, 340) weiterhin einen Stift (146, 246, 346) umfasst.

5. Airbagmodul (100, 200, 300) nach Anspruch 4, wobei der Stift (146, 246, 346) einstückig an einem Ende des Haltegurt-Fangelements (140, 240, 340) ausgebildet ist.

6. Airbagmodul (100, 200, 300) nach Anspruch 1, wobei die Fangkomponente (150, 250, 350) mit dem Modulgehäuse (110, 210, 310) verbunden ist.

7. Airbagmodul (100, 200, 300) nach Anspruch 1, wobei die Fangkomponente (150, 250, 350) mit dem Modulgehäuse (110, 210, 310) einstückig ausgebildet ist.

8. Airbagmodul (100, 200, 300) nach Anspruch 1, wobei das Haltegurt-Fangelement (140, 240, 340) mit dem Modulgehäuse (110, 210, 310) verbunden ist.

9. Airbagmodul (100, 200, 300) nach Anspruch 1, wobei das Haltegurt-Fangelement (140, 240, 340) einen Stift (146, 246, 346) umfasst und wobei der Stift (146, 246, 346) in die Fangkomponente (150, 250, 350) passt.

10. Airbagmodul (100, 200, 300) nach Anspruch 9, wobei der Stift (146, 246, 346) in die Fangkomponente (150, 250, 350) in der ersten Konfiguration passt und in der zweiten Konfiguration aus der Fangkomponente (150, 250, 350) entfernt wird.

11. Verfahren zum Aufblasen eines aufblasbaren Kissens (10), umfassend:
Auslösen eines ersten Gasgenerators (120, 220, 320) zur Abgabe von Gas über eine Auslassgasöffnung (125) in ein aufblasbares Kissen (10), wobei ein Haltegurt (160, 260, 360) mit dem aufblasbaren Kissen (10) verbunden ist;
Halten des Haltegurts (160, 260, 360) über ein Haltegurt-Fangelement (140, 240, 340) in einer ersten Konfiguration so, dass der Haltegurt (160, 260, 360) dazu konfiguriert ist, die Aufblasgröße des aufblasbaren Kissens (10) zu begrenzen;
Auslösen eines zweiten Gasgenerators (130, 230, 330) zur Abgabe von Gas über eine Auslassgasöffnung (135) in das aufblasbare Kissen (10); und
Freigeben des Haltegurts (160, 260, 360), **gekennzeichnet durch** Schwenken von zumindest einem Abschnitt eines Haltegurt-Fangelements (140, 240, 340) um eine Achse, so dass das Haltegurt-Fangelement (140, 240, 340) nicht mehr länger zumindest teilweise um den zweiten Gasgenerator (130, 230, 330) in der ersten Konfiguration gewickelt ist, und so, dass der Haltegurt (160, 260, 360) nicht mehr länger die Aufblasgröße des aufblasbaren Kissens (10) begrenzt, wobei der Schritt des Freigebens des Haltegurts (160, 260, 360) **dadurch** verursacht wird, dass das Gas die Auslassgasöffnung (135) bei Auslösung des zweiten Gasgenerators (130, 230, 330) verlässt und so gegen das Haltegurt-Fangelement (140, 240, 340) gerichtet wird, dass das Auslassgas das Haltegurt-Fangelement (140, 240, 340) direkt von der Auslassgasöffnung (135) weg und in eine zweite Konfiguration schiebt.

12. Verfahren nach Anspruch 11, wobei eine Fangkomponente (150, 250, 350) das Haltegurt-Fangelement (140, 240, 340) lösbar an Ort und Stelle hält.

13. Verfahren nach Anspruch 12, wobei das Haltegurt-Fangelement einen Stift (146, 246, 346) umfasst, der an einem Ende des Haltegurt-Fangelements (140, 240, 340) positioniert ist, wobei der Stift (146, 246, 346) in die Fangkomponente (150, 250, 350) passt und wobei die Kraft der Auslassgasströmung des zweiten Gasgenerators (130, 230, 330) veranlasst, dass der Stift (130, 230, 330) aus der Fangkomponente (150, 250, 350) herausgezogen wird.

## Revendications

1. Un module de sac gonflable (100, 200, 300) se composant de ce qui suit :
un coussin gonflable (10) ;
un boîtier de module (110, 210, 310) ;
un premier élément de gonflage (120, 220, 320) connecté au boîtier de module (110, 210, 310) et positionné de manière à gonfler le coussin gonflable (10), le premier élément de gonflage (120, 220, 320) possédant au moins un orifice de gaz de sortie (125) ;
un deuxième élément de gonflage (130, 230, 330) connecté au boîtier de module (110, 210, 310) et positionné de manière à gonfler le coussin gonflable (10), le deuxième élément de gonflage (130, 230, 330) possédant au moins un orifice de gaz de sortie (135) ;
des sangles de retenue (160, 260, 360) connectées au coussin gonflable (10) ;
un composant de blocage (150, 250, 350) connecté au boîtier de module (110, 210, 310) ; et
un élément de blocage de sangles de retenue (140, 240, 340) ayant une première configuration dans laquelle l'élément de blocage de sangles de retenue (140, 240, 340) bloque les sangles de retenue (160, 260, 360) et une deuxième configuration dans laquelle les sangles de retenue (160, 260, 360) sont libérées de l'élément de blocage de sangles de retenue (140, 240, 360), le composant de blocage (150, 250, 350) étant configuré pour maintenir l'élément de blocage de sangles de retenue (140, 240, 340) en place tout en autorisant la libération, l'élément de blocage de sangles de retenue (140, 240, 340) comportant une bande flexible et l'élément de blocage de sangles de retenue (140, 240, 340) étant positionné à côté de l'orifice de gaz de sortie (135) du deuxième élément de gonflage (130, 230, 330) dans la première configuration, dans laquelle le gaz sortant de l'orifice de gaz de sortie (135) lors du déploiement du deuxième élément de gonflage (130, 230, 330) est dirigé contre l'élément de blocage de sangles de retenue (140, 240, 340) de manière telle que le gaz de sortie pousse directement l'élément de blocage de sangles de retenue (140, 240, 340) dans la direction opposée à l'orifice de gaz de sortie (135) et le fasse passer dans la deuxième configuration.

2. Le module de sac gonflable (100, 200, 300) de la revendication 1, dans lequel l'élément de blocage de sangles de retenue (140, 240, 340) est configuré pour pivoter sur un axe afin de provoquer la libération des sangles de retenue (160, 260, 360).

3. Le module de sac gonflable (100, 200, 300) de la revendication 1, dans lequel l'élément de blocage de sangles de retenue (140, 240, 340) est au moins en partie enroulé autour du deuxième élément de gonflage (130, 230, 330) dans la première configuration.

4. Le module de sac gonflable (100, 200, 300) de la revendication 1, dans lequel l'élément de blocage de sangles de retenue (140, 240, 340) comporte également une broche (146, 246, 346).

5. Le module de sac gonflable (100, 200, 300) de la revendication 4, dans lequel la broche (146, 246, 346) fait partie intégrante d'une extrémité de l'élément de blocage de sangles de retenue (140, 240, 340).

6. Le module de sac gonflable (100, 200, 300) de la revendication 1, dans lequel le composant de blocage (150, 250, 350) est connecté au boîtier de module (110, 210, 310).

7. Le module de sac gonflable (100, 200, 300) de la revendication 1, dans lequel le composant de blocage (150, 250, 350) fait partie intégrante du boîtier de module (110, 210, 310).

8. Le module de sac gonflable (100, 200, 300) de la revendication 1, dans lequel l'élément de blocage de sangles de retenue (140, 240, 340) est connecté au boîtier de module (110, 210, 310).

9. Le module de sac gonflable (100, 200, 300) de la revendication 1, dans lequel l'élément de blocage de sangles de retenue (140, 240, 340) comporte une broche (146, 246, 346) et dans lequel la broche (146, 246, 346) va à l'intérieur du composant de blocage (150, 250, 350).

10. Le module de sac gonflable (100, 200, 300) de la revendication 9, dans lequel la broche (146, 246, 346) va à l'intérieur du composant de blocage (150, 250, 350) dans la première configuration et est retirée du composant de blocage (150, 250, 350) dans la deuxième configuration.

11. Un procédé de gonflage d'un coussin gonflable (10) se composant des opérations suivantes
déployer un premier élément de gonflage (120, 220, 320) afin d'envoyer du gaz dans un coussin gonflable (10) par un orifice de gaz de sortie (125), des sangles de retenue (160, 260, 360) étant connectées au coussin gonflable (10) ;
maintenir les sangles de retenue (160, 260, 360) dans une première configuration au moyen d'un élément de blocage de sangles de retenue (140, 240, 340) de manière telle que les sangles de retenue (160, 260, 360) soient configurées pour limiter la taille de gonflage du coussin gonflable (10) ;
déployer un deuxième élément de gonflage (130, 230, 330) afin d'envoyer du gaz dans le coussin gonflable (10) par un orifice de gaz de sortie (135) ; et
libérer les sangles de retenue (160, 260, 360), ce qui suppose de faire pivoter au moins une partie d'un élément de blocage de sangles de retenue (140, 240, 340) sur un axe de manière à ce que l'élément de blocage de sangles de retenue (140, 240, 340) ne soit plus au moins en partie enveloppé autour du deuxième élément de gonflage (130, 230, 330) dans la première configuration et à ce que les sangles de retenue (160, 260, 360) ne limitent plus la taille de gonflage du coussin gonflable (10), la libération des sangles de retenue (160, 260, 360) étant provoquée par le gaz qui sort de l'orifice de gaz de sortie (135) lors du déploiement du deuxième élément de gonflage (130, 230, 330) et qui est dirigé contre l'élément de blocage de sangles de retenue (140, 240, 340) de manière telle que le gaz de sortie pousse directement l'élément de blocage de sangles de retenue (140, 240, 340) dans la direction opposée à l'orifice de gaz de sortie (135) et le fasse passer dans une deuxième configuration.

12. Le procédé de la revendication 11, dans lequel un composant de blocage (150, 250, 350) maintient l'élément de blocage de sangles de retenue (140, 240, 340) en place tout en autorisant la libération.

13. Le procédé de la revendication 12, dans lequel l'élément de blocage de sangles de retenue comporte une broche (146, 246, 346) positionnée à une extrémité de l'élément de blocage de sangles de retenue (140, 240, 340), la broche (146, 246, 346) allant à l'intérieur du composant de blocage (150, 250, 350) et la force du débit de gaz de sortie du deuxième élément de gonflage (130, 230, 330) amenant la broche (130, 230, 330) à se séparer du composant de blocage (150, 250, 350).
